Europäisches Patentamt

European Patent Office

Office européen des brevets

(19)

(11) Publication number: **0 028 487**
A1

(12) **EUROPEAN PATENT APPLICATION**

(21) Application number: **80303766.2**

(22) Date of filing: **23.10.80**

(51) Int. Cl.³: **G 01 B 7/10**

(30) Priority: **02.11.79 US 90654**

(43) Date of publication of application:
**13.05.81 Bulletin 81/19**

(84) Designated Contracting States:
**CH DE FR GB IT LI**

(71) Applicant: UPA TECHNOLOGY, INC.
60 Oak Drive
Syosset New York 11791(US)

(72) Inventor: Lieber, Derek
337 Fairhaven Boulevard
Woodbury New York 11797(US)

(72) Inventor: Golick, Sidney
74-64 220th Street
Bayside New York 11364(US)

(74) Representative: Brown, David Alan et al,
MATHYS & SQUIRE 10 Fleet Street
London EC4Y 1AY(GB)

(54) Hall effect thickness measuring instrument.

(57) A Hall effect thickness measuring device includes a probe assembly 12 having a magnet 52 and a Hall sensor 54 mounted therein. The Hall sensor 54 is used to measure thickness of a coating on a substrate when either the coating or substrate or both are ferromagnetic by measuring the intensity of the magnetic flux through the Hall sensor, which depends upon the thickness of the coating. A thermistor 70 is provided to modify the measurement signal produced by the Hall sensor 54 to compensate for variations in the signal due to temperature fluctuations of the Hall sensor.

EP 0 028 487 A1

./...

FIG. 2

## Hall effect thickness measuring instrument

This invention relates to thickness measuring instruments and in particular to instruments for non-destructively measuring the thickness of a coating on a substrate when either the coating or substrate or both are ferromagnetic.

There has been a great need for apparatus which non-destructively measures the thickness of electroplated coatings over nonferrous and ferrous substrates due at least in part to the increased price of the plating material in recent years. Non-destructive measuring apparatus has found widespread application in industry for controlling the process of electroplating and also for monitoring the quality of the completed product.

In commercial apparatus now available for making such measurements, an alternating current field is generally used which induces eddy currents to flow in the coating or layer material to be measured. A sensing coil is positioned to detect the resultant magnetic field which is functionally related to the thickness of the layer to be measured. This apparatus is dependent upon the conductivity of the coating in which the eddy currents are induced and thus is subject to inherent variations in conductivity from one sample to another.

Hall effect devices have been used in such measurement apparatus to detect the resultant magnetic field. For example, U.S. Patent No. 3,359,495 (McMaster et al) describes a non-destructive thickness measuring instrument utilizing this eddy current approach and a Hall effect device to detect the resulting magnetic field.

To avoid the conductivity factor of the coatings to be measured, it has been suggested that a direct current approach be used. An example of this type of apparatus is described in U.S. Patent No. 3,440,527 (Steingroever). Here a permanent magnet is used having its polar axis disposed parallel to the surface of the coating to be measured and further having pole pieces on each end of the magnet with surfaces projecting from each such end to the coating to be measured and for contact therewith. The other ends of the pole pieces define an air gap. A Hall effect device is disposed in such air gap to measure the magnetic flux therein. As the thickness of the coating increases, more of the magnetic flux of the permanent magnet is drawn through the coating and less through the air gap. By measuring the flux in the air gap, apparatus is provided for obtaining an indication of the thickness of the coating.

In another application, Hall effect devices have been used in measuring the thickness of ferromagnetic material from one side and also to measure the thickness of non-ferro-magnetic coatings on a ferromagnetic base. See Non-destructive Testing Handbook, Vol. II, pp. 34.17 - 34.18, The Ronald Press 1963.

When measuring coatings having a thickness measured in microns, the above devices are not sufficiently sensitive to provide satisfactory results. One of the major problems has been that these Hall effect devices are sensitive to temperature and the voltage output signal varies with temperature. Thus, different coating thicknesses may be indicated when the same coating is measured with the Hall effect device operating at a different temperature.

The present invention consists in a probe assembly for use in apparatus for measuring the thickness of a coating of material on a substrate where at least one of the coating or substrate comprises a ferromagnetic material, the probe assembly comprising:

a hollow elongate housing having a longitudinal axis and a forward end;

a magnet mounted within the housing having its north and south poles disposed on a line parallel to the longitudinal axis of the housing and being positioned adjacent to but spaced from the forward end of the housing;

a Hall sensor means mounted within the housing in the space between the forward end of the housing and the magnet for providing a signal functionally related to the thickness of the coating; and

a thermistor means mounted in the housing adjacent the Hall sensor means for providing a signal which varies with temperature fluctuations of the Hall sensor.

The present invention overcomes the disadvantages of the prior art devices by utilizing a Hall sensor means for generating a steady direct current field in conjunction with a thermistor for providing a compensation signal for modifying the signal produced by the Hall sensor means so as to compensate for temperature fluctuations of the Hall sensor means.

One embodiment of the present invention utilizes a magnet mounted adjacent to but spaced from a forward end of a probe housing preferably elongate in shape and capable of being held in a user's hand. The magnet is dispoed with its north and south magnetic poles parallel to the longitudinal axis of the probe housing. A Hall sensor is positioned in the space intermediate the magnet and the forward end of the probe housing. This Hall sensor is energized by direct current from a constant type current source and produces an output signal proportional to the magnetic field in which the sensor is located.

By way of example and for purposes of illustration only, the apparatus may be used to detect the thickness of nickel on a non-ferrous substrate. The forward end of the probe housing is positioned adjacent the nickel coating which is to be measured. The magnet generates a steady magnetic field which is drawn to the nickel coating by the ferromagnetic properties of this coating. The magnetic flux to the coating depends upon the thickness of the coating--the thicker the coating the more flux that is directed to the coating. The Hall sensor detects the flux to the coating and produces an output signal functionally related to the thickness of the coating.

In a preferred embodiment of the invention, the magnetic field provided by the magnet is selected to bring the nickel coating well out of the initial region of the permeability curve whereby the output signal of the Hall sensor responds linearly with coating thickness over a broad range of thicknesses so that the signal may be displayed without the need of curve shaping circuitry.

The thermistor, which is positioned in close proximity to the Hall sensor provides a signal dependent upon its temperature, which due to its proximity to the Hall sensor, is also the temperature of the Hall sensor. The output signal of the thermistor is used to modify the signal produced by the Hall sensor to provide a display signal which has been modified to compensate for variations in the Hall sensor signal due to temperature. The temperature variations in the display signal are thus eliminated and the stability and accuracy of the instrument is thereby increased.

A preferred embodiment of the invention will now be described, by way of example, with reference to the accompanying drawings, in which:-

Fig. 1 is a perspective view of thickness measuring apparatus according to the present invention;

Fig. 2 is a cross sectional view of the probe shown in Fig. 1;

Fig. 3 is an end view of the probe shown in Fig. 2; and

Fig. 4 is a schematic block diagram of the components of the apparatus illustrated in Fig. 1.

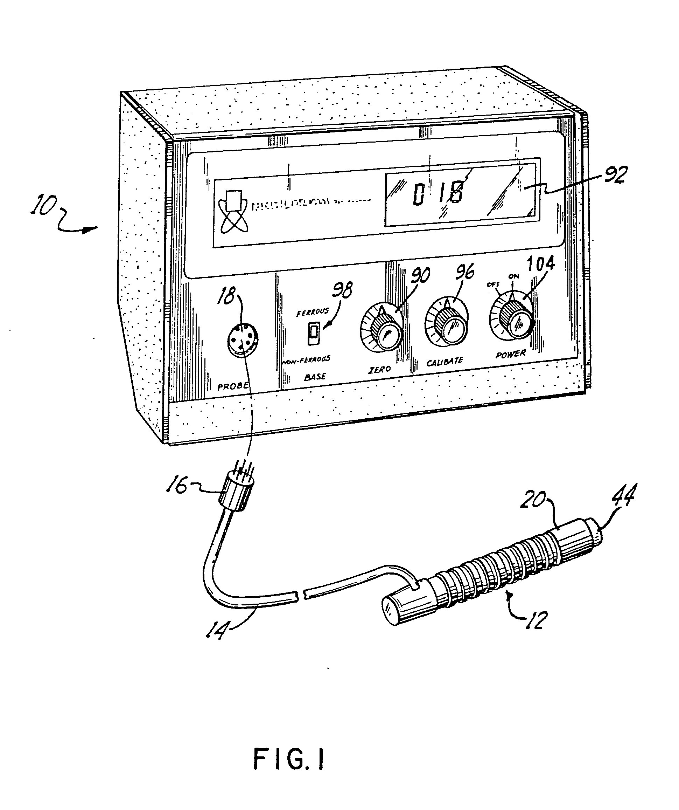

In the embodiment illustrated in Fig. 1, a thickness measurement instrument is shown having instrument housing 10 and a probe 12 connected by cable 14 and connector 16 to socket 18 on housing 10.

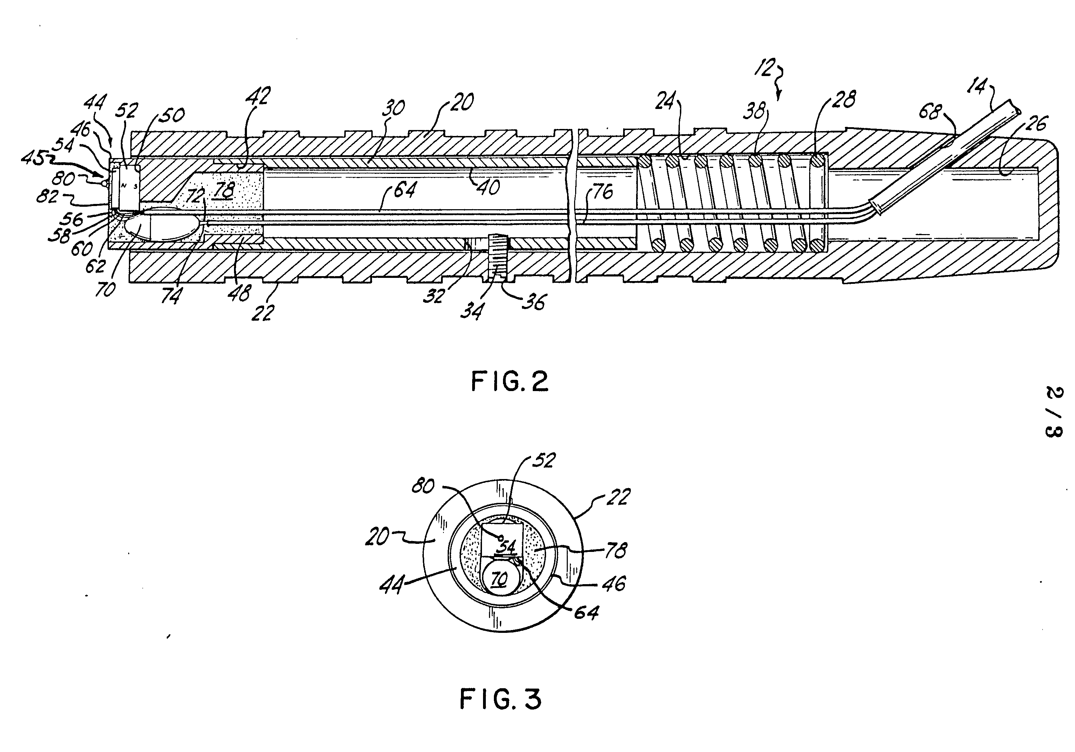

The probe 12 is shown in detail in Fig. 2. This probe includes an elongate probe housing 20 having ridges 22 to permit firm gripping of the probe housing 20 by the user. The probe housing has a forward axial bore 24 which extends into a rearward axial bore 26 of smaller diameter forming a shoulder 28 therebetween.

A hollow inner barrel 30 is mounted in axial bore 24 and is sized to permit axial movement in probe housing 20. A slot 32 is formed in one wall of the inner barrel 30 to receive an end of a threaded set screw 34 which is threaded into a corresponding bore 36 in a wall of the probe housing 20. The set screw 34 in co-operation with slot 32 limits the axial movement of inner barrel 30 with respect to the probe housing 20.

The inner barrel is biased in a forward direction (that is to the left-hand side in Fig. 2) by spring 38 which is disposed between shoulder 28 and the rearward end of inner barrel 30. This spring tends to move the inner barrel 30 in a forward direction until the set screw 34 rests against the rearward edge of slot 32.

The hollow inner barrel 30 has a rearward axial bore 40 and together with a forward axial bore 42 of larger diameter. The axial bore 42 receives probe head 44 having a forward portion 46 sized to be slideably received by bore 24 of probe housing 20 and a rear portion 48 of reduced diameter to be received by bore 42 of inner barrel 30 and secured thereto as with a force fit or by an adhesive.

The forward portion 46 of probe head 44 has a seat 50 formed interior of the probe head on which a permanent magnet 52 rests and is secured thereto as with an adhesive. The permanent magnet 52 is positioned adjacent one interior wall of forward portion 46 and sized to be spaced from the opposite wall of forward portion 46. The permanent magnet 52 being disposed with its north and south magnetic poles aligned along a line parallel to the axis of probe 12. In a preferred embodiment, the north pole is positioned forward of the south pole.

A Hall effect generator or sensor 54 which is commercially available as from F. W. Bell is mounted, preferably adhesively, to the forward face of the permanent magnet 52 as shown in Fig. 2. Two current wires 56 and 58 bring current to the Hall generator 54 and two voltage wires 60 and 62 carry the output signal from the Hall generator 54, the voltage wire 60 being connected to ground. These four wires are encased in sheath 64 which extends through probe 12 and into cable sheath 14 which carries these wires out bore 68 provided in a wall of probe housing 20 and to the connector 16.

A thermistor 70 is sized and positioned in side by side relation to the Hall sensor 54 and disposed closely adjacent thereto as shown in Fig. 2. Two wires 72 and 74 carry current to and from the thermistor 70. These wires are encased in sheath 76 which extends through probe 12 and into cable sheath 14 which carries these wires also to connector 16.

The thermistor 70 is positioned closely adjacent to Hall sensor 54 so that the temperature difference between the two elements is minimized. Furthermore, preferably a thermal epoxy 78 fills the probe head 44 to adhesively secure the thermistor 70, Hall sensor 54, permanent magnet 52 all within probe head 44. The thermal characteristics of this thermal epoxy, which may be, for example; "Able therm 8-2" made by Ablestick Laboratories, are such that it tends to further reduce any temperature differential between the thermistor 70 and the Hall effect sensor 54.

A precision ball 80 is positioned along the axis of the Hall sensor 54 as shown in Figs. 2 and 3 and secured to the probe head 44 with the epoxy 78. This ball 80 is small relative to the forward face of probe head 44 and enables a user to minimize error which otherwise may result when the forward face of probe head 44 is tilted slightly with respect to the surface of the coating to be measured when the forward face of head 44 is positioned in abutting relation with the coating during the measurement process as subsequently described in greater detail.

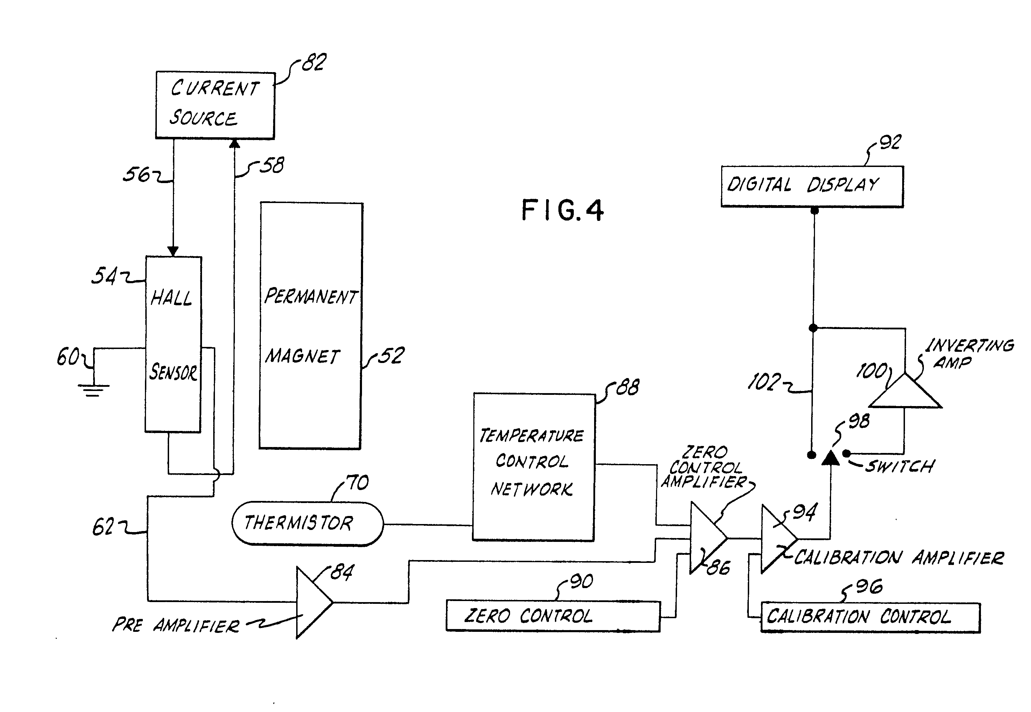

A block diagram of the electrical configuration of the thickness measuring instrument is shown in Fig. 4. The Hall effect sensor 54 is connected by current wires 56 and 58 to a current source 82. The voltage wire 60 connected to the Hall sensor 54 is connected to ground and the voltage wire 62 which carries the output voltage of the Hall sensor 54 is connected to pre-amplifier 84. The pre-amplifier 84 is connected to the operational zero control amplifier 86 and amplifies the voltage signal from the Hall sensor 54 to be within the linear operating range of the operational zero control amplifier 86.

The thermistor 70 is connected to a current source (not shown) and produces a voltage output signal which varies with the temperature of the thermistor 70 in a known manner and in particular increases in amplitude with temperature.
With the probe configuration as shown in Fig. 2, the temperature
of the thermistor is very near the temperature of the Hall
sensor 54. The voltage output signal of the Hall effect sensor
54 also varies with temperature in a known manner and in
particular decreases in amplitude with temperature. The
voltage signal of the thermistor is directed to a temperature
control network 80 designed to produce a voltage which is equal
to the negative of the voltage level of the output signal from
the Hall sensor 54 due to temperature. The zero control amplifier
86 sums the voltage signal from the thermistor 70 and the
voltage from the Hall sensor 54 to provide a signal voltage
independent of temperature. A zero control 90 is also connected
to the zero control amplifier 86 to provide an additional voltage
to the input of zero control amplifier 86 so as to enable a user
to calibrate this amplifier to produce a zero voltage when the
coating thickness is zero, that is, measuring the substrate
alone. This is accomplished in practice by placing the forward
end of probe 12 in abutting relation with a piece of the substrate
alone and turning the knob of the zero control 90 as shown in Fig. 1
until the digital display 92 reads zero.

The output signal from the zero control amplifier 86
is then directed to a calibration amplifier 94 which is connected
to a calibration control 96. The calibration amplifier is used
to calibrate the instrument for the particular coating material on the particular substrate material. By way of explanation, the size, shape and strength of the magnet 52 is selected so that the Hall sensor 54 provides a voltage signal which responds linearly with plating thickness over a broad range. The slope of the linear relation between thickness and voltage varies with the materials used for coatings and substrates. To properly select the proper slope, the probe 12 is placed with its forward end in abutting relation with a substrate having a coating with known thickness. The knob for the calibration control 96 shown in Fig. 1 is turned until the display 92 indicates the known thickness. The instrument is now properly calibrated for this combination of substrate and coating material.

The voltage signal from the calibration amplifier 94 is then directed to manual switch 98 which either switches the signal through inverting amplifier 100 or through a bypass 102 and then to the digital display 92. With switch 98, coatings which are more ferromagnetic than the substrate can be measured and also coatings which are less ferromagnetic than the substrate can be measured. When, for example, a ferromagnetic coating on a non-ferrous substrate is measured, switch 98 can be switched to "NON-FERROUS" as shown in Figs. 1 and 4 and the signal from the calibration amplifier 94 will be directed through the bypass 102 to display 92. On the other hand, when a ferromagnetic coating on a substrate of greater permeability is to be measured, switch 98 is switched to "FERROUS" and the signal from calibration amplifier 94 through inverting amplifier 100 to digital display 92.    Thus, the present invention may be used for many different combinations of substrate and coating materials.

To use the present invention, the power switch 104, as shown in Fig. 1, is turned "ON". This power switch was not shown in Fig. 4 as it is a conventional switch for supplying power in a conventional manner to the instrument 10 and probe 12. The instrument is first calibrated for zero coating thickness by measuring a sample of substrate alone. This is accomplished by positioning probe 12 with its forward face 45 of probe head 44 in abutting relation with the substrate sample. The probe housing 20 is then pushed toward the substrate sample causing probe head 44, which normally extends beyond the forward end of probe housing 20, to be moved against the bias of spring 38 until the forward end of probe housing 20 abuts the substrate sample. In this position, the precision ball 80 also abuts the substrate sample in substantially a point contact. The point contact of ball 80 with the surface of the material to be measured acting in co-operation with the forward end of probe housing also abutting the surface of the material to be measured optimizes the same orientation of the Hall sensor with respect to the surface of the material to be measured everytime a measurement is made.

To calibrate the instrument for zero coating thickness, the user then turns to knob of the zero control 90 until a zero reading is obtained on the digital display 92.

Next, the instrument is calibrated for the particular substrate and coating materials used. A sample with this combination of substrate and coating materials with a known coating thickness is positioned in front of probe 12. Probe 12 is then pushed against this sample as before. The knob for the calibration control 96 is then turned until the digital display 92 indicates a thickness corresponding to the known coating thickness.

The instrument is now properly calibrated for the particular combination of coating and substrate materials and can now measure coatings of unknown thickness by pushing the probe 12 into abutting relation with the coating to be measured. The correct thickness will be indicated on digital display 92.

The above described invention has been found particularly useful in measuring nickel coatings whether they are on ferrous or non-ferrous substrates and even when the nickel coating has an overplate, for example, of gold, rhodium or chromium.

With today's technology, Hall sensors 54 can be made very small in size with little effect on the sensitivity of the device. Thus, the measuring areas can be made correspondingly small. This is a distinct advantage over probes employing coils and an alternating field (the eddy current devices) where the voltage response becomes increasingly nonlinear as the probe is made smaller. The use of a direct current field instead of an alternating current field also effectively eliminates conductivity related errors which are inherent with eddy curent devices.

Further, and in particular with instruments for measuring nickel coatings, the field strength of magnet 52 can be selected to bring the nickel coating well out of the initial region of its permeability curve and thereby reduce errors due to variations in permeability which are common in nickel platings.

0028487

- 15 -

CLAIMS:

1.       A probe assembly for use in apparatus for measuring
the thickness of a coating of material on a substrate where
at least one of the coating or substrate comprises a ferromagnetic
material, the probe assembly comprising:

       a hollow elongate housing having a longitudinal axis
and a forward end;

       a magnet mounted within the housing having its north
and south poles disposed on a line parallel to the longitudinal
axis of the housing and being positioned adjacent to but
spaced from the forward end of the housing;

       a Hall sensor means mounted within the housing in the
space between the forward end of the housing and the magnet
for providing a signal functionally related to the thickness
of the coating; and

       a thermistor means mounted in the housing adjacent
the Hall sensor means for providing a signal which varies
with temperature fluctuations of the Hall sensor.

2.       A probe assembly according to Claim 1 wherein
the magnet, Hall sensor means and thermistor means are all
encased with a thermal epoxy for securing these elements
in a fixed relation to one another and further to reduce
any temperature differential between the Hall sensor and
the thermistor.

3.     A probe assembly according to Claim 1 or Claim 2 wherein the housing includes a forward face and a precision ball mounted on the forward face forward of the Hall sensor to reduce error which may otherwise occur in tilting the forward face with respect to an upper surface of the layer to be measured.

4.     A probe assembly according to any one of Claims 1 to 3 further including:

        a head assembly axially movable within the housing and within which the magnet, Hall sensor and thermistor are mounted;

        a forward limit means; and

        a bias means for biasing the head assembly in a forward direction against the forward limit means; and

        wherein the forward limit means is positioned so that the forward end of the head assembly extends beyond the forward end of the housing when the head assembly rests against the forward limit means; and

        wherein the interior of the housing is shaped to permit the head assembly to be moved into the housing when a user pushes the head assembly into engagement with the coating to be measured; and

        wherein the forward end of the housing in co-operation with the head assembly provides structure when measurements are being taken for maintaining the Hall sensor in the same relation to the coating to be measured from measurement to measurement.

5.       Apparatus for measuring the thickness of a coating of material on a substrate where at least one of the coating or substrate comprises a ferromagnetic material, comprising:

a probe assembly including:

a hollow elongate housing having a longitudinal axis and a forward end;

a magnet mounted within the housing having its north and south poles disposed on a line parallel to the longitudinal axis of the housing and being positioned adjacent to but spaced from a forward end of the housing;

a Hall sensor means mounted within the housing in the space between the forward end of the housing and the magnet for providing a signal functionally related to the thickness of the layer; and

a thermistor means mounted in the housing adjacent to the Hall sensor for providing a signal which varies with temperature fluctuations of the Hall sensor;

means connected to the thermistor for modifying the
signal produced by the Hall sensor to compensate for variations
in the signal of the Hall sensor produced by temperature
fluctuations of the Hall sensor; and

display means receiving the signal from the Hall
sensor after being modified by the signal of the thermistor
for displaying the thickness of the coating.

6.    Apparatus according to Claim 5 further including zero
calibration means for calibrating the display means to read
zero when the layer sample to be measured consists of substrate
only.

7.    Apparatus according to Claim 5 or Claim 6 further
including a material calibration means for calibrating the
display means for the particular combination of materials
being used as the layer and as substrate.

8.    Apparatus for measuring the thickness of a coating of
material on a substrate where at least one of the coating
or substrate comprises a ferromagnetic material, the apparatus
including a probe assembly as claimed in any one of claims 1
to 7.

FIG.1

FIG.2

FIG.3

FIG.4

0028487

European Patent
Office

**EUROPEAN SEARCH REPORT**

Application number

EP 80 30 3766

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | G 01 B 7/10 |
| | TECHNIK, vol. 30, no. 11, November 1975 BERLIN (DE) J. PELIKANOVA: "Praktische Aspekte der magnetostatischen Dickenmessung mit Anwendung eines Hallgenera-tors" pages 700 to 703 <br><br> * page 701, left-hand column, line 16 to page 702, left-hand column, line 8; page 703, left-hand column, lines 17 to 21 * | 1, 5-8 | |
| | -- | | |
| | DE - A - 2 114 143 (ELCOMETER IN-STRUMENTS LTD.) <br><br> * page 2, line 9 to page 4, line 22 * | 1, 3, 5-8 | G 01 B 7/10 |
| | -- | | |
| | US - A - 4 005 360 (A. OTT) <br><br> * column 3, line 54 to column 6, line 9 * | 3, 4 | |
| | -- | | |
| A | US - A - 3 213 542 (F.C. MURTLAND) <br><br> * column 3, line 74 to column 5, line 21 * | 1, 5-7 | |
| | -- | | |
| A | US - A - 2 862 178 (W.C. MOORE) <br><br> * the whole document * | 1, 5-7 | |
| | ------ | | |

TECHNICAL FIELDS SEARCHED (Int. Cl.³)

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-02-1981 | CARETTE |

EPO Form 1503.1  06.78